Europäisches Patentamt

European Patent Office

Office européen des brevets

(19)

(11) Veröffentlichungsnummer: **0 347 577 B1**

(12) **EUROPÄISCHE PATENTSCHRIFT**

(45) Veröffentlichungstag der Patentschrift:
30.10.91 Patentblatt 91/44

(51) Int. Cl.$^5$: **B01J 49/02**, C02F 1/42

(21) Anmeldenummer: 89108719.9

(22) Anmeldetag: 16.05.89

(54) **Verfahren zum Behandeln von Ionenaustauschermassen, insbesondere zum Regenerieren derselben nach Enthärtung und Entsalzung wässriger Lösungen.**

(30) Priorität: 22.06.88 DE 3821036

(43) Veröffentlichungstag der Anmeldung:
27.12.89 Patentblatt 89/52

(45) Bekanntmachung des Hinweises auf die
Patenterteilung:
30.10.91 Patentblatt 91/44

(84) Benannte Vertragsstaaten:
AT BE CH DE ES FR GB GR IT LI LU NL SE

(56) Entgegenhaltungen:
US-A- 3 021 276
US-A- 3 398 090
US-A- 4 181 605

(73) Patentinhaber: Kunz, Gerhard, Dipl.-Chem. Dr.
Ing.
Ruhrstrasse 111
W-5628 Heiligenhaus (DE)

(72) Erfinder: Kunz, Gerhard, Dipl.-Chem. Dr. Ing.
Ruhrstrasse 111
W-5628 Heiligenhaus (DE)

(74) Vertreter: Merten, Fritz
Tristanstrasse 5
W-8500 Nürnberg 40 (DE)

## Beschreibung

Die Erfindung bezieht sich auf ein Verfahren zum Behandeln von Ionenaustauschermassen, insbesondere zum Regenerieren derselben nach der Enthärtung und/oder der Entsalzung wäßriger Lösungen, bei dem eine Regenerierlösung durch die Ionenaustauschermasse geleitet wird und diese nach Spülung in regeneriertem und gewaschenem Zustand für eine erneute Enthärtung oder Entsalzung wäßriger Lösungen wieder verwendet werden kann.

Es ist allgemein bekannt, daß Ionenaustauschermassen bei Beladungsvorgängen, wie Enthärtung oder Entsalzung wäßriger Lösungen, die ionogenen Dissoziationskomponenten der gelösten Salze, wie beispielsweise Calzimionen, aufnehmen und dafür die an den aktiven Zentren der Ionenaustauschermassen gespeicherten Ionen, beispielsweise Natriumionen, an die wäßrige Lösung abgeben. Wenn der Vorrat an gespeicherten Ionen erschöpft ist, im besagten Beispiel also alle gespeicherten Natriumionen gegen Calzimionen ausgetauscht sind, so kommt der Ionenaustausch zum Stillstand. Um die Ionenaustauschermasse wieder aufzufrischen, d.h. zu regenerieren, wird eine Lösung der zu speichernden Ionen, wie z.B. eine Natriumchloridlösung, durch die in der Regel körnige Ionenaustauschermasse geleitet, wobei die während der Beladung von ihr aufgenommenen Ionen, im Beispiel die Calziumionen, eluiert und die von der Regeneriermittellösung zugeführten Natriumionen gespeichert werden.

Zur Durchführung der Regeneration nach einer Beladung im Abstrom wird bekannterweise die Regeneriermittellösung von oben nach unten, also im Gleichstrom, durch die Ionenaustauschermasse geleitet. Die Regeneration einer Ionenaustauschermasse im Gleichstrom zeigt jedoch erhebliche Nachteile, wie sich am Beispiel einer Enthärtung von Rohwasser zeigen läßt :

Die üblicherweise in einem Filterbehälter geschichtete Ionenaustauschermasse wird vom Rohwasser durchflossen und beläd sich in Fließrichtung, also von oben nach unten, mit Calziumionen. Die Resthärte im Produktwasser ist dabei umso niedriger, bzw. die Qualität umso besser, je weniger Calziumionen in der untersten, vom Wasser zuletzt durchflossenen Ionenaustauscherschicht, enthalten sind. Bei der anschließenden Regeneration im Gleichstrom werden die in den oberen Ionenaustauscherschichten hoch angereicherten Calziumionen von der Regeneriermittellösung eluiert und in die untersten Schichten gespült. Um diese Schichten in einen ausreichend guten Regenerierzustand zu bringen, muß die gesamte Ionenaustauschermasse mit einem großen Überschuß an Regeneriermittel behandelt werden. Diese Überschußmengen werden nicht ausgenutzt und sind ein beträchtlicher ökonomischer Verlust. Darüber hinaus gelangen sie in das Abwasser und erhöhen die Salzfracht der Vorfluter, wobei sich die Chloride des ungenutzten Regeneriermittels besonders umweltschädigend auswirken.

Es ist ferner bekannt, die Regeneriermittellösung gegenläufig zur Beladungsrichtung, also im Aufstrom, durch die Ionenaustauschermasse zu leiten. Die Nachteile dieses Verfahrens wirken sich dahingehend aus, daß dabei die gesamte Ionenaustauschermasse umgewälzt und vermischt wird und insbesondere die mit Calziumionen hoch beladene Ionenaustauschermasse aus den oberen in die unteren Schichten und die noch kaum beladene Ionenaustauschermasse aus dem unteren Bereich nach oben gespült wird. Um eine gute Produktqualität zu erzielen, muß also wegen dieser Umwälzung die gesamte Ionenaustauschermasse mit großem Überschuß an Regeneriermittel behandelt werden. Der nicht ausgenutzte Regeneriermittelanteil gelangt als hochsalzhaltiges Abwasser in die Vorfluter und stellt eine erhebliche Umweltbelastung dar. Wenn eine Regeneration beispielsweise mit 200% der Theorie betrieben wird, so gelangt bei jedem Zyklus doppelt soviel Regeneriermittel, im Beispiel der Enthärtung Natriumchlorid, in die Abwässer, als theoretisch notwendig wäre.

Es wurde nun gefunden, daß die höchste Regeneriermittelausnutzung bei gleichzeitig bester Produktqualität dann erzielt wird, wenn bei der regenerativen Behandlung der Ionenaustauschermasse im Aufstrom diese nicht umgewälzt wird.

Hier setzt die Erfindung ein, der die Aufgabe zugrunde liegt, eine im Abstrom beladene und in einem Filterbehälter geschichtete, körnige Ionenaustauschermasse zunächst mit Regeneriermittellösung und danach mit Spüllösung zu behandeln, dabei diese Lösungen gegenläufig zur Beladungsrichtung in diese Ionenaustauschermasse einzuleiten und diese Einleitung, wie auch die gesamte Durchströmung der Ionenaustauschermasse im Aufstrom so durchzuführen, daß eine Lockerung ihres Kornverbandes entsteht, dabei aber eine Durchmischung und Umschichtung in Strömungsrichtung nicht erfolgt und schließlich die Regeneriermittellösung oberhalb der Ionenaustauschermasse abzuleiten.

Gemäß der Erfindung wird diese Aufgabe verfahrenstechnisch dadurch gelöst, daß der als Regeneriermittellösung und als Spüllösung dienende Flüssigkeitsstrom gegenläufig zur Beladungsrichtung in die von der Beladungsflüssigkeit zuletzt durchflossenen, untersten Ionenaustauschermassen eines Filterbehälters diskontinuierlich eingeleitet wird, dergestalt, daß dieser Flüssigkeitsstrom in eine Abfolge von Intervallen aufgeteilt wird, die sich aus jeweils einer Impulsströmung und einer sich daran anschließenden Pausenzeit zusammensetzen, und daß diese Impulsströmungen beim jeweiligen hydrodynamischen Anheben der Ionenaustauscher-

2

masse auf eine Hubhöhe von höchstens dem zehnfachen größten Korndurchmesser der Ionenaustauschermasse begrenzt sind und daß die der Impulsströmung jeweils folgende Pausenzeit bis zur vollständigen Sedimentation der während der Impulsströmung angehobenen Ionenaustauschermasse, insbesondere im Bereich der Flüssigkeitszuführung, ausgedehnt wird und daß erst nach dieser Sedimentation eine erneute Anströmung der Ionenaustauschermasse durch die Impulsströmung des nächsten Intervalls erfolgt, und daß ferner diese Abfolge von Intervallen bis zum Ende der regenerativen Behandlung und der Spülung fortgesetzt wird, wobei die Flüssigkeit die gesamte Ionenaustauschermasse intermittierend im Aufstrom durchfließt und nach Durchströmung der letzten, obersten Schicht, als Abwasser abgeleitet wird.

Durch diese Maßnahme, in eine, im Abstrom beladene Ionenaustauschermasse, die Regeneriermittellösung gegenläufig zur Beladungsrichtung in die bei der Beladung zuletzt durchflossenen Ionenaustauschermassen einzuleiten, diese Einleitung diskontinuierlich in Form von Intervallen, bestehend aus Impulsströmen und Pausenzeiten vorzunehmen, und diese Impulsströme so auszubilden, daß sie einerseits die gesamte Schicht anheben und andererseits eine Hubhöhe vom zehnfachen größten Korndurchmesser nicht überschreiten, und ferner die Pausenzeit der Intervalle soweit auszudehnen, daß eine vollständige Sedimentation der Ionenaustauschermasse nach jeder Impulsströmung erfolgt und dann erst eine erneute Impulsströmung aufzugeben, wird die der Erfindung zugrunde liegende Aufgabe nicht nur vorteilhaft gelöst, sondern es wird auch eine Reihe verfahrenstechnischer und wirtschaftlicher Vorteile erzielt. Diese Vorteile sind im einzelnen :

a) Die im Aufstrom zu extremer Instabilität, also einer weitreichenden Rückvermischung, neigenden Ionenaustauschermassen bleiben durch die erfindungsgemäße Limitierung der Impulsströme bzw. der Hubhöhen stabil, d.h. die Ionenaustauschermasse, in einem Filter verbleibt, während der Behandlung im Aufstrom ohne Durchmischung im geschichteten Zustand. Dadurch bleiben auch die Konzentrationsprofile erhalten, die sich während der vorangegangenen Beladung in der Ionenaustauschermasse eingestellt hatten, was wiederum eine Ausnutzung der für einen optimalen Ionenaustausch notwendigen maximalen Konzentrationsdifferenzen bedeutet. Es wird die höchste Regeneriermittelausnutzung bzw. der geringste Regeneriermittelüberschuß bei gleichzeitig bester Produktqualität und ausreichender Kapazität erzielt. Das Konzentrationsprofil, das sich während der Beladung im Abstrom in der Ionenaustauschermasse ausgebildet hat, d.h. das Konzentrationsgefälle der absorbierten Ionen in der Ionenaustauschermasse in Richtung der Beladungsdurchströmung, wird bei der Regeneration der Ionenaustauschermasse im Aufstrom nicht durch Umwälzung zerstört und das sich während der Regeneration neu gebildete Konzentrationsprofil bleibt bis zum Ende der Spülung erhalten.

b) Die diskontinuierliche Zuleitung der Regeneriermittellösung und der Spüllösung im Aufstrom und die Aufteilung dieser Flüssigkeitsströme in Intervallen, die aus einer Impulsströmung und einer Pausenzeit bestehen, erzeugen Lockerungszonen über den gesamten Querschnitt der körnigen Ionenaustauschermasse und bewirken damit eine gleichmäßige Flüssigkeitsverteilung, was sich in einem praktisch vollständigen Ionenaustausch bis zu den Konzentrationsgleichgewichten des jeweiligen Ionensystems auswirkt.

c) Ein weiterer Vorteil des erfindungsgemäßen Verfahrens ist, daß durch die Ausdehnung der Pausenzeit bis zur vollständigen Sedimentation der Austauschermasse nach jeder Impulsströmung und durch die erst danach folgende Anströmung der sedimentierten Ionenaustauschermasse mit einer neuen Impulsströmung eine jeweils stabile Anlaufsituation für die Abfolge aller Impulsströme im Verlauf der gesamten regenerativen Behandlung der Ionenaustauschermasse erzielt, eine Rückvermischung der Ionenaustauschermasse unterbunden und eine hohe Regeneriermittelausnutzung erreicht wird.

d) Durch die erfindungsgemäße, impulsartige Anhebung der Ionenaustauschermasse bis zu einer limitierten Hubhöhe von höchstens dem zehnfachen größten Korndurchmesser, entsteht eine vorteilhafte Auflockerung der Ionenaustauschermasse ohne eine den Wirkungsgrad der Regeneration äußerst abträgliche Rückvermischung einzuleiten. Ein zusätzlicher Vorteil dieser Auflockerung, die sich in Form von Lockerungszonen durch die ganze Schicht wellenartig fortsetzt, besteht darin, daß eine Kanalbildung und Verklumpung der Ionenaustauschermasse und demzufolge eine inhomogene Flüssigkeitsverteilung und damit Wirkungsgradminderung vermieden wird. Vorteilhaft wirkt sich diese Auflockerung auch dahingehend aus, daß feindisperse Anteile aus der Ionenaustauschermasse und/oder aus der zugeführten Flüssigkeit ausgetragen werden und somit eine Ablagerung dieser Teile in der Ionenaustauschermasse und als Folge eine Verklumpung vermieden wird.

e) Ein wesentlicher Vorteil des erfindungsgemäßen Verfahrens ist es, daß durch die zur Strömungsrichtung der Beladung gegenläufige Einleitung der Regeneriermittel- und Spüllösung in die während der Beladung zuletzt durchflossenen Ionenaustauschermasse und die Aufteilung dieser Strömung in Impulsströmungen und Pausenzeiten mit Begrenzung der Hubhöhe für die Ionenaustauschermasse eine sonst sehr heftige Rückvermischung der Ionenaustauschermasse verhindert wird. Auf Grund dieser hydrodynamischen Stabilisierung der Ionenaustauschermasse wird für die Beladungs- und Regenerierzyklen des Ionenaustausches eine Gegenstromsituation geschaffen, die sich nicht nur auf eine gegenläufige Strömungsführung

3

bei Beladung und Regeneration bezieht, sondern tatsächlich auf gegenläufige Konzentrationsdifferenzen. Dies bedeutet, daß sich die Konzentrationen sowohl in der Austauscherphase als auch in der Lösungsphase nicht nur bei der Beladung, sondern auch während der Regeneration entlang den für das jeweilige Ionensystem gültigen Gleichgewichtskurven verändern, womit eine optimale Prozeßführung gegeben ist.

f) Die erfindungsgemäßen Maßnahmen bewirken vor allem, daß die Schichtung der Ionenaustauschermassen erhalten bleibt. Dadurch werden die untersten Ionenaustauscherschichten in einem Filterbehälter, welche die Qualität des Produktes bei der Beladung bestimmen, mit der frischen Regeneriermittellösung zuerst behandelt, also optimal regeneriert. Die ablaufende Regeneriermittellösung dagegen passiert zuletzt die obersten und am höchsten beladenen Ionenaustauscherschichten und wird deshalb voll ausgenutz. Dies bedeutet, daß sich einerseits eine hervorragende Produktqualität ergibt und andererseits die mit dem Abwasser in die Vorfluter gelangenden Regeneriermittelüberschüsse, meist für die Vegetation besonders gefährliche Chloride, drastisch reduziert werden.

Diese Reduktion des Regeneriermittelaufwandes ist darüber hinaus ein deutlicher ökonomischer Vorteil.

g) Ein weiterer Vorteil des erfindungsgemäßen Verfahrens ist, daß durch die Bildung von Lockerungszonen in der Ionenaustauschermasse auch die Flüssigkeitsströmung ohne Rückvermischung bleibt, was sich in einem äußerst geringen Spülwasserbedarf für das Ausspülen des Regeneriermittels auswirkt und neben einem ökonomischen Vorteil eine geringere Abwasserbelastung der Vorfluter bedeutet.

h) Die Vorteile des erfindungsgemäßen Verfahrens wirken sich auch dahingehend aus, daß bei größeren Filtern mechanische Einbauten zur Stützung der obersten Austauscherschichten, wie Düsensysteme, Drainagesysteme und dergl., die bisher zur Durchführung einer regenerativen Gegenstrombehandlung der Ionenaustauschermassen verwendet wurden, entfallen, und somit derartige Anlagen preisgünstiger hergestellt werden können. In kleinen Filtern jedoch, in denen bisher aus geometrischen Gründen keine mechanischen Einbauten untergebracht werden konnten, können mit dem erfindungsgemäßen Verfahren Ionenaustauschvorgänge, wie die Enthärtung oder Entsalzung von Rohwässern, im Gegenstrom unter optimalen Bedingungen und mit Ergebnissen dicht an den theoretischen Grenzwerten durchgeführt werden.

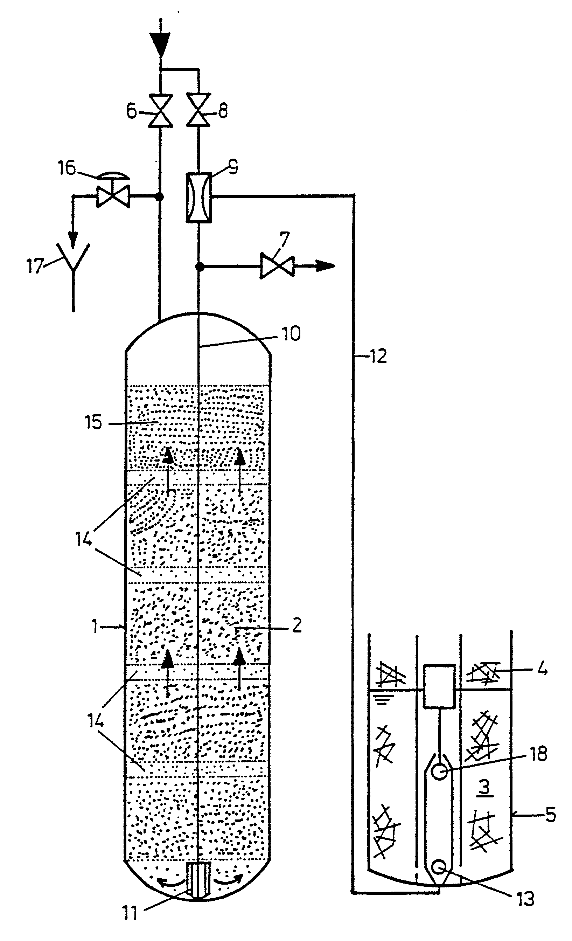

In der Zeichnung ist das Beispiel einer Anordnung von Vorrichtungen zur Durchführung des erfindungsgemäßen Verfahrens für die Enthärtung von Rohwasser und die regenerative Behandlung der Ionenaustauschermasse mit Natriumchloridlösung dargestellt, ohne es auf dieses allein zu beschränken. Sie zeigt :

Eine schematische Anordnung von Vorrichtungen zur Durchführung des erfindungsgemäßen Verfahrens, bestehend aus einem Filterbehälter mit Ionenaustauschermasse, Zu- und Ableitungen für die Flüssigkeitsströme mit zugehörigen Absperrorganen und einen Speicherbehälter für die Regeneriermittellösung.

Nach dem erfindungsgemäßen Verfahren erfolgt die regenerative Behandlung der im Filterbehälter 1 geschichteten Ionenaustauschermasse 2 mit Natriumchloridlösung 3, die sich zusammen mit einem Vorrat an festem Natriumchlorid 4 im Speicherbehälter 5 befindet. Bei geschlossenem Rohwasserventil 6 und geschlossenem Produktventil 7 wird durch das offene Rohwasserventil 8 Treibwasser durch den Injektor 9 und durch die Leitung 10 in die Filterdüse 11 geleitet.

Dabei wird durch die Leitung 12 und das Fußventil 13 konzentrierte Natriumchloridlösung 3 vom Injektor 9 angesaugt und dem Treibwasser zugemischt. Die in der Rohrleitung 10 mit dem Treibwasser verdünnte Natriumchloridlösung ist die Regeneriermittellösung, die aus der Filterdüse 11 intervallartig in Form von Impulsströmungen, gefolgt von jeweils einer Pausenzeit mit vollständiger Sedimentation der Ionenaustauschermasse, in die unterste Schicht der Ionenaustauschermasse 2 austritt und dann diese Ionenaustauschermasse im Aufstrom durchfließt. Dabei entstehen die Lockerungszonen 14, die sich wellenartig durch die ganze Ionenaustauscherschicht bewegen und schließlich die oberste, am höchsten mit Calziumionen beladene Ionenaustauscherschicht 15, passieren.

Nach dem Durchgang durch die Ionenaustauschermasse 2 hat die Regeneriermittellösung ihre Natriumionen weitgehend an die Ionenaustauschermasse abgegeben und dafür deren Calziumionen aufgenommen, wobei die Anreicherung an Calziumionen in der Regeneriermittellösung dem Konzentrationsgleichgewicht der hoch beladenen Ionenaustauschermasse in der letzten Schicht 15 entspricht. Diese Lösung wird als Abwasser durch das Ventil 16 in den Kanal 17 geschleust, wobei das Ventil 16 die intervallartigen Impulsströme mit den jeweiligen Pausenzeiten durch entsprechende Ansteuerung, in an sich bekannter Weise, auslöst. Wenn der Vorrat an konzentrierter Natriumchloridlösung 3 im Speicherbehälter 5 zur Neige geht, schließt das Fußventil 13 und es gelangt nur noch Treibwasser durch den Injektor 9, das nun die Ionenaustauschermasse 2 von Regeneriermittel freispült und ebenfalls in Form intervallartiger Impulsströme, gefolgt von jeweils einer Pausenzeit, in den Kanal 17 ausgeschleust wird. Nach der Spülung schließen die Ventile 8 und 16 und das Rohwasserventil 6 und das Produktventil 7 öffnen. Rohwasser strömt durch das Ventil 6 auf die oberste Schicht 15 der Ionenaustauschermasse 2 und durchfließt diese im Abstrom, passiert zuletzt die unterste Schicht der Ionenaustauschermasse und gelangt durch die Filterdüse 11 in die Rohrleitung 10 und verläßt durch das Ventil 7 als

4

Produktwasser das Filter. Ein Teilstrom dieses Produktwassers fließt durch den Injektor 9 und die Rohrleitung 12 in den Speicherbehälter 5 und füllt ihn bis zum Schließen des Schwimmerventils 18 auf. Durch Auflösung des festen Natriumchlorids 4 bildet sich erneut eine konzentrierte Natriumchloridlösung 3 als Vorrat für die nächste regenerative Behandlung der Ionenaustauschermasse 2.

Während der Durchströmung der Ionenaustauschermasse 2 mit Rohwasser nimmt diese die Calziumionen auf und gibt dafür Natriumionen an das durchströmende Wasser ab. Die verbleibende Restkonzentration an Calziumionen im Produktwasser wird dabei von der zuletzt durchströmten, also untersten Ionenaustauscherschicht, bestimmt. Diese Restkonzentration ist diejenige Gleichgewichtskonzentration, die dem Beladungs- bzw. Regeneriergrad dieser untersten Schicht entspricht. Sie ist umso niedriger, die Qualität des Produktes also umso besser, je geringer die Calziumionenkonzentration in dieser untersten Ionenaustauscherschicht ist. Dies ist im dargestellten Beispiel der Zeichnung der Fall, in dem keine Rückvermischung der Ionenaustauschermasse 2 auftritt, also keine Anteile aus der hoch mit Calziumionen beladenen obersten Schicht 15 in die unterste Schicht im Bereich der Filterdüse 11 gelangen können.

In der nachfolgenden Tabelle wird die Wirksamkeit des erfindungsgemäßen Verfahrens am Beispiel zweier Enthärtungsfilter dargestellt, wobei das Filter A erfindungsgemäß und das Filter B in bisher bekannter Weise betrieben wurde. Die Tabelle enthält Angaben zur Filtergröße und die gewonnenen Meßwerte nach 200 hintereinander gefahrenen Beladungszyklen mit jeweils zugehöriger Regeneration der Ionenaustauschermasse:

| Filterdimensionen Betriebsbedingungen Meßwerte | FILTER | |
|---|---|---|
| | A | B |
| Filterdurchmesser    mm | 150 | 150 |
| Ionenaustauschermasse    l | 14 | 14 |
| Rohwasserdruck    bar | 3,0 | 3,0 |
| Rohwasserhärte    °dH | 19,4 | 19,4 |
| Beladungsgeschwindigkeit    l/h | 300 | 300 |
| Rohwassergesamtsalzgehalt    mval/l | 8,3 | 8,3 |
| Resthärte im Produkt    °dH | 0,05 | 0,5-1,0 |
| NaCI-Menge pro Regeneration g | 700 | 1.000 |
| Regeneriermittelverbrauch in % der Theorie | 115 | 180 |
| Produzierte Weichwassermenge    l | 1.500 | 1.370 |
| Abwassermenge in % der Weichwassermenge | 3 | 9 |

**Patentansprüche**

1. Verfahren zum Behandeln von Ionenaustauschermassen, insbesondere zum Regenerieren nach Enthärtung oder Entsalzung von wäßrigen Lösungen, die kornförmig in einem Filterbehälter geschichtet sind und abwechselnd diesen Beladungs- und Regeneriervorgängen ausgesetzt werden, *wobei der als Regeneriermittellösung und als Spüllösung dienende Flüssigkeitsstrom gegenläufig zur Beladungsrichtung in die von der Beladungsflüssigkeit zuletzt durchflossenen untersten Ionenaustauschermassen eines Filterbehälters diskontinuierlich eingeleitet wird, und wobei die Flüssigkeit die gesamte Ionenaustauschermasse im Aufstrom durchfließt und nach Durchströmung der letzten, obersten Schicht, als Abwasser abgeleitet wird,* **dadurch gekennzeichnet,** daß der als Regeneriermittellösung und Spüllösung dienende Flüssigkeitsstrom in eine Abfolge von Intervallen aufgeteilt wird, die sich aus jeweils einer Impulsströmung und einer sich daran anschließenden Pausenzeit zusammensetzen, und daß diese Impulsströmungen beim jeweiligen, hydrodynamischen Abheben der Ionenaustauschermasse auf eine Hubhöhe von höchstens dem zehnfachen größten Korndurchmesser der Ionenaustauschermasse (2) begrenzt sind und daß die der Impulsströmung jeweils folgende Pausenzeit bis zur vollständigen Sedimentation der während der Impulsströmung angehobenen Ionenaustauschermasse (2), insbesondere im Bereich der Flüssigkeitszuführung, ausgedehnt wird und daß erst nach dieser Sedimentation eine erneute Anströmung der Ionenaustauschermasse (2) durch die Impulsströmung des nächsten Intervalls erfolgt, und daß ferner diese Abfolge von Intervallen bis zum Ende der regenerativen Behandlung und Spülung fortgesetzt wird.

## Claims

1. A process for treating ion exchanger substances, in particular for the regeneration after softening or desalination of aqueous solutions, which are stratified in granular form in a filter container and are subjected alternately to these charging and regeneration procedures, in which respect the liquid flow serving as regenerating medium solution and as flushing solution is introduced discontinuously countercurrently to the charging direction into the lowermost ion exchanger substances, flowed through last by the charging liquid, of a filter container, and in which respect the liquid flows in up-current through the entire ion exchanger substance and after flowing through the last uppermost layer is carried off as waste water, characterised in that the liquid stream serving as regenerating medium solution and flushing solution is split up into a succession of intervals, which are composed of respectively an impulse flow and a directly following pause time, and in that these impulse flows upon the respective hydrodynamic raising of the ion exchanger substance are limited to a lift height of at the most ten-times the largest grain diameter of the ion exchanger substance (2) and in that the pause time respectively following the impulse flow is extended until the sedimentation of the ion exchanger substance (2) raised during the impulse flow, in particular in the region of the liquid feed, is completed, and in that only after this sedimentation does a renewed incident flow through of the ion exchanger substance (2) by the impulse flow of the next interval ensue, and in that furthermore this succession of intervals is continued until the end of the regenerative treatment and flushing.

## Revendications

1. Procédé pour le traitement de masses échangeuses d'ions disposées en couches sous forme granulaire dans un récipient filtrant et soumises en alternance à ces processus de chargement et de régénération, en particulier pour régénérer des solutions aqueuses après adoucissement ou dessalement, procédé dans lequel le flux de liquide qui sert de solution de régénération et de solution de rinçage est introduit en discontinu dans les masses échangeuses d'ions d'un récipient filtrant traversées en dernier par le fluide de chargement, en contre-courant du sens de chargement, et dans lequel le fluide traverse toute la masse échangeuse d'ions en courant ascendant et est évacué sous forme d'eau résiduaire après avoir traversé la dernière couche supérieure, ledit procédé étant caractérisé en ce que le flux de liquide servant de solution de régénération et de rinçage est divisé en une succession d'intervalles respectivement constitués par un écoulement pulsé et par un temps de repos qui le suit, que ces écoulements pulsés sont limités à une hauteur de levage d'au maximum dix fois le plus grand diamètre des grains de la masse échangeuse d'ions (2) lors du soulèvement hydrodynamique respectif de la masse échangeuse d'ions, que le temps de repos qui suit l'écoulement pulsé est étendu jusqu'à complète sédimentation de la masse échangeuse d'ions (2) soulevée au cours de l'écoulement pulsé, notamment dans la zone d'alimentation du liquide, que la masse échangeuse d'ions (2) n'est à nouveau traversée par l'écoulement pulsé de l'intervalle suivant qu'au terme de cette sédimentation et en ce qu'en outre, cette succession d'intervalles se poursuit jusqu'à la fin du traitement de régénération et du rinçage.